# EUROPÄISCHE PATENTSCHRIFT

(11) **EP 0 463 235 B1**
(45) Veröffentlichungstag und Bekanntmachung des Hinweises auf die Patenterteilung: **25.05.1994**
(21) Anmeldenummer: 90124668.6
(22) Anmeldetag: 19.12.1990
(51) Int. Cl.: G01D 15/22

(54) **Schreibeinrichtung zum Aufzeichnen von Messwerten, insbesondere von alphanumerischen Daten**
Writing device for recording measured values, especially alpha-numerical data
Dispositif d'inscription pour l'enregistrement de mesures, en particulier de données alphanumériques

(30) Priorität: 25.06.1990 DE 4020147
(43) Veröffentlichungstag der Anmeldung: 02.01.1992
(73) Patentinhaber: SENSYCON GESELLSCHAFT FÜR INDUSTRIELLE SENSORSYSTEME UND PROZESSLEITTECHNIK MBH, 30179 Hannover (DE)
(72) Erfinder: Tönebe, Werner, W-3013 Barsinghausen 9 (DE)
(74) Vertreter: Meissner, Peter E., Dipl.-Ing.

(56) Entgegenhaltungen:
- EP-A- 0 096 085
- DESIGN ENGINEERING, März 1987, London, GB, Seiten 11-12; "Drawing implement control with a linear magnet"

## Beschreibung

Die Erfindung bezieht sich auf eine Schreibeinrichtung zum Aufzeichnen von Meßwerten, insbesondere von alphnumerischen Daten, auf einen Aufzeichnungsträüger mit einem einen Schreibstift aufweisenden Schreibkopf, der mittels einer Halterung beweglich auf einem quer zum Aufzeichnungsträger bewegbaren Schlitten angeordnet und mittels elektrischer Impulse betätigbar ist, wobei die Halterung aus zwei im wesentlichen parallel zueinander verlaufenden und an einem Ende miteinander verbundenen Schenkeln ferromagnetischen Materials besteht, wobei die Halterung mit einer mit den elektrischen Impulsen gespeisten Wicklung versehen ist und im Bereich des Schreibkopfes zwischen beiden Schenkeln eine einen Luftspalt bildende Verengung vorhanden ist.

Aus der EP 0 096 085 B1 ist eine derartige Schreibeinrichtung bekannt. Dabei sind zwei Rahmenschenkel von denen einer am Schlitten befestigt ist und der andere den Schreibkopf trägt, parallelogrammartig durch zwei Blattfedern miteinander verbunden, die den Schreibkopf gegen eine Schreibauflage federnd beaufschlagen. Der Aufbau dieser bekannten Schreibeinrichtung ist sehr bauteilaufwendig.

Es sind weiterhin bereits Schreibeinrichtungen dieser Gattung bekannt, bei denen der Schreibkopf über aufwendige Hebel- und Wippenkonstruktionen, die mit Tauchspulmagneten gesteuert werden, bewegt wird.

Andere bekannte Schreibeinrichtungen arbeiten mit Thermodruckköpfen, die jedoch teuer sind und die bekannten Nachteile beim Benutzen von Thermopapier mit sich bringen.

Diese Nachteile der bekannten Schreibeinrichtungen sollen durch die Erfindung überwunden werden. Es ist daher Aufgabe der Erfindung, eine Schreibeinrichtung zu konzipieren, die mit einem möglichst geringen mechanischen Aufwand herstellbar ist und ein möglichst geringes Bauvolumen aufweist. Aufgabe der Erfindung ist es ferner, die Schreibeinrichtung dergestalt auszubilden, daß sie nachträglich in Diagramm-Schreibgeräte eingebaut undd zusätzlich zu kontinuierlich arbeitenden Schreibsystemen betrieben werden kann.

Diese Aufgabe wird bei einer Schreibeinrichtung der eingangs genannten Art dadurch gelöst, daß die Halterung aus einem einteiligen, blattfederartigen U-förmigen Trägerelement besteht, dessen Schenkel federelastisch ausgebildet sind, von denen der eine Schenkel am Schlitten befestigt ist und der andere an seinem freien Ende den Schreibkopf trägt, wobei der Luftspalt zwischen den beiden Schenkeln gebildet ist.

Bei Beaufschlagung der Wicklung mit den Steuerimpulsen wird in den beiden Schenkeln ein Magnetfluß erzeugt, der bestrebt ist, den Luftspaxlt zwischen den beiden Schenkeln zu minimieren, wodurch der bewegliche Schenkel an den feststehenden Schenkel herangezhogen und auf diese Weise der Schreibkopf mit dem Schreibstift auf den Aufzeichnungsträger gedrückt wird, wodurch ein Punkt entsteht.

Es ist ohne weiteres ersichtlich, daß eine solche Halterung äußerst flach bauend hergestellt werden kann, wenn die Halterung als U-förmiges Trägerelement mit federelastischen Schenkeln ausgebildet ist. Der mechanische Aufwand umfaßt die Halterung mit den beiden miteinander verbundenen Schenkeln eine Wicklung sowie einen quer zum Aufzeichnungsträger bewegbaren Schlitten, üblicherweise aus zwei Führungsstangen und einer darauf gelagerten Platte sowie dem entsprechenden Antrieb aufgebaut sein kann.

Die mit elektrischen Steuerimpulsen gespeiste Wicklung umfaßt am zweckmäßigsten den den Schreibkopf tragenden Schenkel der Halterung. Hierdurch läßt sich ein besonders geringes Bauvolumen erreichen. Denkbar sind aber auch eine Anordnung der Wicklung auf dem am Schlitten befestigten Schenkel sowie um beide Schenkel herum, wobei die letztgenannte Ausführungsform jedoch höhere Stromstärken zur Ansteuerung erfordert.

Als zweckmäßig hat es sich erwiesen, den den Schreibkopf tragenden Schenkel länger als die anderen Schenkel auszubilden und den Schreibkopf auf den längeren Schenkel aufschiebbar auszubilden. Hierdurch läßt sich der Schreibkopf, der vorzugsweise als Tintenpatrone mit daran angeformtem Schreibstift ausgebildet ist, besonders leicht austauschen. Um eine unbeabsichtigte Lageveränderung des Schreibkopfes auf dem Schenkel zu verhindern, empfiehlt es sich, Schreibkopf und Schenkel rastend miteinander verbindbar auszubilden.

Gemäß einer vorteilhaften Ausführungsform ist die den Luftspalt bildende Verengung zwischen den beiden Schenkelkn durch einen aus einem der Schenkel ausgestanzten und abgebogenen Lappen gebildet. Je geringer der Luftspalt ist und je größer die Federelastizität des beweglichen Schenkels ist, desto geringer kann die Stromstärke der elektrischen Impulse gewählt werden. Andererseits wird mit geringer werdendem Luftspalt auch der Freiweg des beweglichen Schenkels und damit der Absenkweg für den Schreibstift geringer. Hinsichtlich der Federelastizität des Schenkels sind Grenzen durch das Gewicht des Schreibkopfes gegeben. Entscheidend ist also, daß die geometrischen Abmessungen des beweglichen Schenkels so dimensioniert sind, daß einerseits die Durchbiegekraft des beweglichen Schenkels mit der erforderlichen Druckkraft des Schreibkopfes bzw. Schreibstiftes abgestimmt ist, andererseits aber die magnetische Anzugskraft mit einer möglichst niedrigen Stromstärke in der Spule realisiert werden kann.

Um eine statische Über-Bestimmung des Systems - damit ist ein gleichzeitiger starrer Kontakt im angezogenen Zustand zwischen Schreibstift und Aufzeichnungsträger, magnetischem Schließkontakt und einander kontaktierende Schenkelenden gemeint - zu vermeiden, empfiehlt es sich, den Aufzeichnungsträger im Schreibbereich in Richtung des Schreibstifts elastisch ausweichbar zu führen. Dies kann vorteilhafterweise dadurch realisiert werden, daß eine sich parallel zum Schlittenweg erstreckende, vorzugsweise walzenartige Schreibunterlage vorhanden ist, die im Auftreffbereich des Schreibstifts mit einer Nut versehen ist. Diese Nut gestattet es, daß der Aufzeichnungsträger in Richtung der Druckkraft des Schreibstifts durchaus weich in die Nut nachgeben kann.

Die Erfindung sei anhand der Zeichnung, die in zum Teil schematischer Darstellung ein Ausführungsbeispiel enthält, näher erläutert. Es zeigen
- Figur 1: eine Aufsicht auf die erfindungsgemäße Schreibeinrichtung und
- Figur 2: einen Schnitt durch die Schreibeinrichtung nach Figur 1 entlang der Linie II-II.

Die Schreibeinrichtung besteht aus einem Schlitten 1, der auf zwei Führungsstangen 2 und 3 gleitet, die an zwei Seitenteilen 4 und 5 eines Linienschreibers befestigt sind.

Die Führungsstange 2 durchsetzt zwei am Schlitten 1 angeordnete Lageraugen 6 und 7.

Die Drehsicherung des Schlittens erfolgt durch die Führungsstange 3 und Führungsnuten 8 am rückwärtigen Schlittenteil.

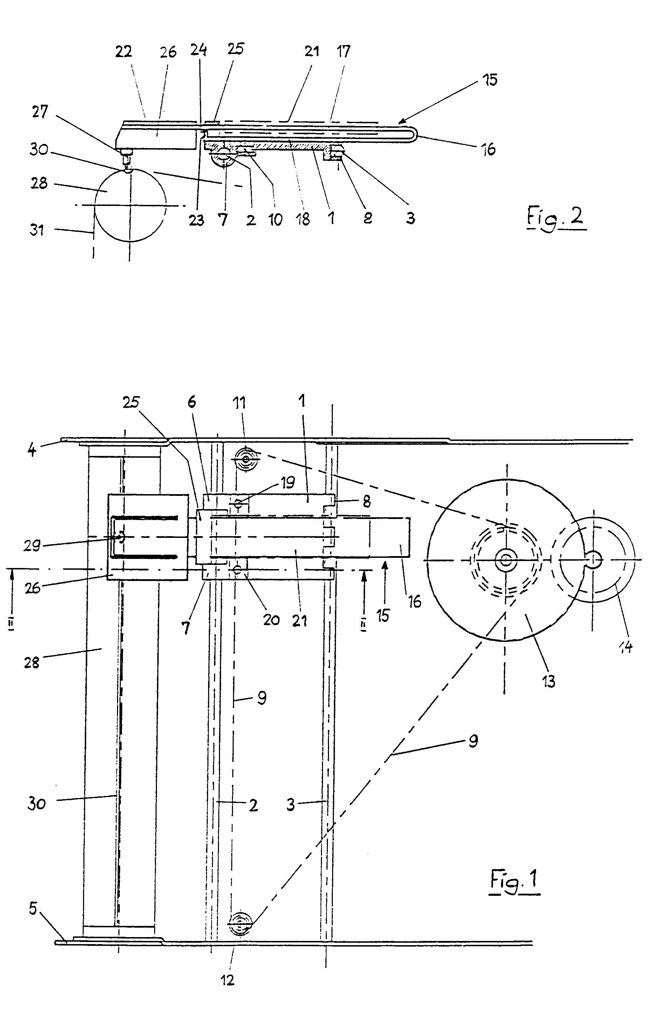

Die Bewegung des Schlittens erfolgt mittels eines Seilantriebes, der aus einem Zugseil 9, das an der Unterseite des Schlittens mittels Schrauben 10 befestigt ist und drei Seilrollen 11, 12 und 13 umschlingt. Die Seilrolle 13 wird von einem Schrittmotor 14 angetrieben, der den Schlitten in seiner jeweiligen Position präzise verfährt. Auf dem Schlitten 1 sitzt die Halterung 15, die aus einem U-förmigen Trägerelement 16 besteht, das zwei Schenkel 17 und 18 aufweist. Am Schenkel 18 sind zwei Befestigungsfahnen 19 und 20 angeformt, mittels derer und dazugehöriger Schrauben das Trägerelement 16 auf dem Schlitten 1 befestigt ist. Der Schenkel 17 durchsetzt eine Wicklung 21 und ragt mit seinem freien Ende 22 über das andere Ende des Schenkels 18 hinaus. Am Ende des Schenkels 18 ist, wie insbesondere aus Figur 2 ersichtlich ist, ein Lappen 23 aufgebogen und zwar derart, daß zwischen dem Lappenende und dem Schenkel 17 ein kleiner Luftspalt 24 auftritt. Auf der diesem Luftspalt gegenüberliegenden Seite des Schenkels 17 befindet sich ein Anschlag 25, der an den Schlitten 1 angeformt ist.

Auf dem freien Ende 22 des Schenkels 17 sitzt der Schreibkopf 26, der in Form einer Tintenpatrone ausgebildet ist. Die Tintenpatrone trägt einen Schreibstift 27, die gegen eine walzenartige Schreibunterlage 28 gerichtet ist. Der Schreibkopf 26 ist mit Rastmitteln 29 auf dem freien Ende des Schenkels 17 gesichert.

In der walzenartigen Schreibunterlage 28, die parallel zu den Führungsstangen 2 und 3 der Schreibeinrichtung ausgerichtet ist, ist im Auftreffbereich des Schreibstifts 27 eine Nut 30 vorhanden, die ein Ausweichen des Aufzeichnungsträgers 31 während des Schreibvorgangs gestattet, wodurch eine statische über-Bestimmung des Systems vermieden wird.

Bei Beaufschlagung der Wicklung 21 mit elektrischen Stromimpulsen wird in dem aus ferromagnetischem Material bestehenden Trägerelement 16 ein Magnetfluß erzeugt, der die Schenkel 17 und 18, den Lappen 23 und den Luftspalt 24 durchsetzt. Da dieser Kreis versucht, seinen magnetischen Widerstand möglichst klein zu halten, wird der Schenkel 17 gegen den Lappen 23 bewegt und gleichzeitig der Schreibstift 27 gegen den Aufzeichnungsträger 31. Hierdurch wird ein Punkt auf dem Aufzeichnungsträger 31 erzeugt. Nach dem Ende des Stromimpulses federt der Schenkel 17 in seine Ausgangslage zurück und kommt hierbei zur Anlage an den Anschlag 25. Danach wird der Schlitten durch den Schrittmotor 14 in seine neue Position verfahren und erneut ein Stromimpuls auf die Wicklung 21 gegeben. Nachdem alle zur Erzeugung der alphanumerischen Daten erforderlichen Punkte in einer Linie quer zum Aufzeichnungsträger aufgezeichnet sind, wird der Aufzeichnungsträger quer zur Verschiebungsbewegung des Schlittens 1 vorwärtsbewegt, so daß, wenn die neue Position des Aufzeichnungsträgers erreicht worden ist, eine neuerliche Reihe von Punkten aufgezeichnet werden kann.

Die walzenartige Schreibunterlage, die in vorliegendem Beispiel feststehend ausgebildet ist, kann selbstverständlich auch um ihre Längsachse drehbar zwischen den beiden Seitenteilen 4 und 5 gelagert sein. Es ist dann jedoch erforderlich, diese Walze auf ihrem Umfang mit einer Vielzahl von Nuten 30 zu versehen, die in einem solchen Abstand zueinander angeordnet sind, daß bei schrittweiser Vorwärtsbewegung der walzenartigen Schreibunterlage 28 jeweils immer eine Nut unter den Schreibstift 26 zu liegen kommt.

## Patentansprüche

1. Schreibeinrichtung zum Aufzeichnen von Meßwerten, insbesondere von alphanumerischen Daten, auf einen Aufzeichnungsträger mit einem einen Schreibstift aufweisenden Schreibkopf, der mittels einer Halterung beweglich auf einem quer zum Aufzeichnungsträger bewegbaren Schlitten angeordnet und mittels elektrischer Impulse betätigbar ist, wobei die Halterung aus zwei, im wesentlichen parallel zueinander verlaufenden und an einem Ende miteinander verbundenen Schenkeln ferromagnetischen Materials besteht, wobei die Halterung mit einer mit den elektrischen Impulsen gespeisten Wicklung versehen ist und im Bereich des Schreibkopfes zwischen beiden Schenkeln eine einen Luftspalt bildende Verengung vorhanden ist, dadurch gekennzeichnet, daß die Halterung (15) aus einem einteiligen, blattfederartigen U-förmigen Trägerelement (16) besteht, dessen Schenkel (17, 18) federelastisch ausgebildet sind, von denen der eine Schenkel (18) am Schlitten befestigt ist und der andere an seinem freien Ende (22) den Schreibkopf (26) trägt und wobei der Luftspalt (24) zwischen den beiden Schenkeln (17, 18) gebildet ist.

2. Schreibeinrichtung nach Anspruch 1, dadurch gekennzeichnet, daß die Wicklung (21) den den Schreibkopf (26) tragenden Schenkel (17) umfaßt.

3. Schreibeinrichtung nach einem der Ansprüche 1 bis 2, dadurch gekennzeichnet, daß der den Schreibkopf (26) tragende Schenkel (17) länger als der andere Schenkel (18) ist und der Schreibkopf (26) auf den Schenkel (17) aufschiebbar ausgebildet ist.

4. Schreibeinrichtung nach einem der Ansprüche 1 bis 3, dadurch gekennzeichnet, daß Schreibkopf (26) und Schenkel (17) rastend miteinander verbindbar sind.

5. Schreibeinrichtung nach einem der Ansprüche 1 bis 4, dadurch gekennzeichnet, daß der Schreibkopf (26) als Tintenpatrone ausgebildet ist.

6. Schreibeinrichtung nach einem der Ansprüche 1 bis 5, dadurch gekennzeichnet, daß die den Luftspalt (24) bildende Verengung zwischen den beiden Schenkeln (17, 18) durch einen aus einem der Schenkel (18) ausgestanzten und abgebogenen Lappen (23) gebildet ist.

7. Schreibeinrichtung nach einem der Ansprüche 1 bis 6, dadurch gekennzeichnet, daß der Aufzeichnungsträger (31) im Schreibbereich in Richtung des Schreibstifts (27) elastisch ausweichbar geführt ist.

8. Schreibeinrichtung nach Anspruch 7, dadurch gekennzeichnet, daß ein sich parallel zum Schlittenweg erstreckende, vorzugsweise walzenartige Schreibunterlage (28) vorhanden ist, die im Auftreffbereich des Schreibstifts (27) mit einer Nut (30) versehen ist.

## Claims

1. Recording device for recording measured values, in particular alphanumeric data, on a recording medium with a recording head which comprises a stylus and is arranged in a mobile manner by means of a holder on a carriage, which can move transversely to the recording medium, which head can be operated by means of electrical pulses, the holder consisting of two ferromagnetic legs, which extend essentially parallel to one another and are connected together at one end, the holder being provided with a winding to which the electrical pulses are delivered, and a constriction which forms an air gap being provided between the two legs in the area of the recording head, characterised in that the holder (15) consists of a single-piece, U-shaped carrier element (16) which is formed like a leaf spring and the legs (17, 18) of which are resilient, one leg (18) being attached to the carriage and the other bearing the recording head (26) at its free end (22), and the air gap (24) being formed between the two legs (17, 18).

2. Recording device according to claim 1, characterised in that the winding (21) encompasses the leg (17) bearing the recording head (26).

3. Recording device according to claim 1 or 2, characterised in that the leg (17) bearing the recording head (26) is longer than the other leg (18), and the recording head (26) is formed such that it can be pushed onto the leg (17).

4. Recording device according to one of claims 1 to 3, characterised in that the recording head (26) and the leg (17) can be locked together.

5. Recording device according to one of claims 1 to 4, characterised in that the recording head (26) is formed as an ink cartridge.

6. Recording device according to one of claims 1 to 5, characterised in that the constriction between the two legs (17, 18) which forms the air gap (24) is formed by a tongue (23) which is punched out of the leg (18) and bent.

7. Recording device according to one of claims 1 to 6, characterised in that the recording medium (31) is guided such that it can yield resiliently in the direction of the stylus (27) in the recording area.

8. Recording device according to claim 7, characterised in that a preferably cylinder-like recording support (28) is provided which extends parallel to the carriage travel and is provided with a groove (30) in the area of contact of the stylus (27).

## Revendications

1. Dispositif d'écriture pour enregistrer des valeurs de mesure, en particulier des données alphanumériques, sur un support d'enregistrement, comportant une tête d'écriture qui est munie d'un stylet d'écriture, qui est agencée de façon mobile au moyen d'un élément de maintien sur un chariot pouvant se déplacer transversalement au support d'enregistrement, et qui peut être actionnée au moyen d'impulsions électriques, l'élément de maintien étant constitué de deux branches en matériau ferromagnétique, qui s'étendent pour l'essentiel parallèlement l'une par rapport à l'autre et qui sont reliées ensemble à une extrémité, et l'élément de maintien étant muni d'un enroulement recevant les impulsions électriques, un resserrement qui forme une fente d'aération existant dans la zone de la tête d'écriture entre les deux branches,
caractérisé en ce que l'élément de maintien (15) est constitué d'un élément porteur (16) en une seule pièce, en forme de U et du type à ressort à lames, dont les branches (17,18) sont réalisées de façon élastique, desquelles branches l'une (18) est fixée sur le chariot et l'autre porte à son extrémité libre (22) la tête d'écriture (26), la fente d'aération (24) étant formée entre les deux branches (17,18).

2. Dispositif d'écriture selon la revendication 1,
caractérisé en ce que l'enroulement (21) entoure la branche (17) portant la tête d'écriture (26).

3. Dispositif d'écriture selon l'une des revendications 1 à 2,
caractérisé en ce que la branche (17) portant la tête d'écriture (26) est plus longue que l'autre branche (18) et la tête d'écriture (26) est réalisée de façon à pouvoir être enfilée sur la branche (17).

4. Dispositif d'écriture selon l'une des revendications 1 à 3,
caractérisé en ce que la tête d'écriture (26) et la branche (17) peuvent être reliées ensemble, de façon crantée.

5. Dispositif d'écriture selon l'une des revendications 1 à 4,
caractérisé en ce que la tête d'écriture (26) est réalisée sous forme de cartouche à encre.

6. Dispositif d'écriture selon l'une des revendications 1 à 5,
caractérisé en ce que le resserrement entre les deux branches (17,18), formant la fente d'aération (24), est formé d'une languette (23) découpée dans l'une des branches (18) et recourbée.

7. Dispositif d'écriture selon l'une des revendications 1 à 6,
caractérisé en ce que le support d'enregistrement (31) est guidé dans la zone d'écriture en direction du stylet d'écriture (27) de façon à pouvoir l'éviter élastiquement.

8. Dispositif d'écriture selon la revendications 7,
caractérisé en ce qu'il comporte un support d'écriture (28) s'étendant parallèlement au déplacement du chariot, réalisé de préférence en forme de rouleau, et muni d'une gorge (30) dans la zone de contact du stylet d'écriture (27).
